(19) Europäisches Patentamt
European Patent Office
Office européen des brevets

(11) **EP 2 480 749 B1**

(12) **EUROPEAN PATENT SPECIFICATION**

(45) Date of publication and mention
of the grant of the patent:
**14.11.2018  Bulletin 2018/46**

(51) Int Cl.:
***E21B 21/08*** (2006.01)

(21) Application number: **10762621.0**

(22) Date of filing: **21.09.2010**

(86) International application number:
**PCT/EP2010/063865**

(87) International publication number:
**WO 2011/036144 (31.03.2011 Gazette 2011/13)**

(54) **CONTROL METHOD AND APPARATUS FOR WELL OPERATIONS**

STEUERVERFAHREN UND VORRICHTUNG FÜR BOHRLOCHOPERATIONEN

APPAREIL ET PROCÉDÉ DE COMMANDE POUR OPÉRATIONS LIÉES À UN PUITS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **22.09.2009  GB 0916628**

(43) Date of publication of application:
**01.08.2012  Bulletin 2012/31**

(73) Proprietor: **Statoil Petroleum AS
4035 Stavanger (NO)**

(72) Inventors:
• **KAASA, Glenn-Ole
  4035 Stavanger (NO)**
• **FJALESTAD, Kjetil
  3731 Skien (NO)**

(74) Representative: **Branderhorst, Matthijs Pieter Arie
et al
Marks & Clerk LLP
Fletcher House
Heatley Road
The Oxford Science Park
Oxford OX4 4GE (GB)**

(56) References cited:
**WO-A1-2008/051978      US-A1- 2006 037 781
US-A1- 2007 227 774**

• **NAKAGAWA E Y ET AL: "APPLICATION OF
AERATED-FLUID DRILLING IN DEEP WATER",
WORLD OIL, GULF PUBLISHING COMPAGNY,
HOUSTON, TX, US, vol. 220, no. 6, 1 June 1999
(1999-06-01), pages 47-50, XP000831481, ISSN:
0043-8790**

EP 2 480 749 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a control method and apparatus for well operations, for example well drilling and completion and well control. The invention is applicable in particular, though not necessarily, to so-called Managed Pressure Drilling (MPD).

The International Association of Drilling Contractors (IADC) defines MPD as "an adaptive drilling process used to more precisely control the annular pressure profile throughout a wellbore." MPD systems comprise a closed pressure system for providing automatic control of the backpressure within a wellbore during a drilling process [or other drilling and completion operations]. Existing MPD solutions employ conventional feedback control, using proportional plus integral (PI), and possibly proportional plus integral plus derivative (PID), feedback from the pressure of the fluid within the wellbore annulus to control one or more chokes and/or pumps manipulating the extraction of fluid from the wellbore. Some systems utilise direct control, which comprises stabilising the downhole pressure at a given desired pressure set point. A real-time hydraulic model may be used to compute the downhole annulus pressure during drilling , e.g. based upon the measured topside pressure. Alternatively, in some systems, the downhole pressure is measured directly and relayed topside using high speed drill string telemetry. Other systems utilise indirect control, attempting to stabilise the topside upstream choke pressure to a set point corresponding to a desired downhole pressure. A real-time hydraulic model is used to compute a choke pressure corresponding to the desired downhole pressure.

Such existing systems are based on conventional feedback control technology, which results in some fundamental shortcomings with respect to robustness and performance. In particular, existing systems suffer from poor robustness against disturbances, typically because high gain is required in the controller to achieve a fast response to pressure variations. Lack of robustness is particularly troublesome in the case of gas passing through the choke, causing chattering in the control input.

Furthermore, existing systems also suffer from degraded performance during critical operations, particularly pump ramp-up/down and drill string movements. The performance of existing systems may also degrade without re-tuning of controller parameters during drilling (primarily because the length of the well increases, and thus the effective stiffness of the hydraulic system decreases).

Model Predictive Control (MPC) is a general control methodology for model-based control which has been proposed for improved pressure control in MPD systems in an effort to solve the above problems. However, proposed solutions using MPC are related to the type of model which has been used, which are either: highly advanced dynamic models of the annular pressure dynamics based on partial differential equations, which are computationally demanding and numerically non-robust, thus making them unsuitable for robust control; or simple empirical models which require continuous updating/tuning of several model parameters, which again makes them unsuitable for practical implementation. Proposed solutions using MPC applied to MPD are at present not mature enough for practical use and have been primarily of academic interest. Consequently, no MPC-solutions have ever been implemented for MPD.

The following patent documents are concerned with MPD systems; WO2008016717, US2005269134, US2005092523, US2005096848, GB2447820, and US7044237. US2007/227774 describes a system whereby an extraction pump and choke are controlled to achieve a predefined pressure. US2006037781 describes a drilling system in which a pressure/flow control device can allow decrease or increase to the back pressure at the well head so that the outflow can be restored to the predicted value determined by the system. WO2008051978 describes a back pressure and PID controller for an automatic choke.

It is an object of the present invention to overcome or at least mitigate the aforementioned problems with known MPD systems. This object is achieved at least in part by using a determined pressure offset to calculate a desired extraction flow rate from the wellbore annulus. The choke valve(s) or pumps, or indeed any appropriate type of flow control device, in the extraction path are set to achieve this desired extraction rate.

According to a first aspect of the present invention there is provided a method of controlling the annular pressure in a well during a well construction operation. The operation comprises pumping a fluid down a tubing located within the well and extracting the fluid that flows back through an annulus within said well and surrounding the tubing. The method comprises defining a set pressure $p_{ref}$, calculating a desired extraction flow rate $q_c$ of fluid from said annulus in dependence upon the set pressure $p_{ref}$ and a pumped flow rate into the annulus, and setting at least one flow control device in an extraction path using the calculated desired extraction flow rate, to achieve said desired extraction flow rate in the fluid.

Embodiments of the invention offer improved robustness against disturbances, and in particular sudden disturbances within the well, as well as reducing or even eliminating the need for retuning of control parameters during an operation in order to maintain system stability.

The step of calculating a desired extraction flow rate may be additionally made in dependence upon a determined or estimated influx or efflux $q_{res}$ through the well walls or a part of the well walls. The method of the invention may comprise determining a fluid pressure $p$ within said annulus and determining a pressure offset of the determined pressure $p$ with respect to said set pressure $p_{ref}$, said step of calculating a desired extraction flow rate being additionally made in dependence upon said pressure offset. In this case, the step of determining a fluid pressure within the annulus may comprise measuring a fluid pressure at a downhole end of the annulus. The step of determining a fluid pressure within the annulus may comprise measuring a fluid pressure at a topside end of the annulus.

The step of using said pressure offset to determine a desired extraction flow rate of fluid from the annulus may comprise scaling said pressure offset to compensate for compression of the fluid within the annulus. The pressure offset may be scaled by a factor $V_a/\beta_a$, where $V_a$ is the volume of said annulus and $\beta_a$ is the effective bulk modulus of the fluid within said annulus.

The step of using said pressure offset to calculate a desired extraction flow rate of fluid from the annulus may comprise further scaling said pressure offset by a constant gain factor $K_p$.

The step of calculating a desired extraction flow rate $q_c$ may comprise evaluating at least one of the following terms:

- $\dot{V}_a$, where $\dot{V}_a$ is the rate of change of the volume of a wellbore annulus within the system;

$q_{bit}$, wherein $q_{bit}$ is the flow of fluid into the annulus through a bottom hole apparatus;

$q_{res}$, wherein $q_{res}$ is the flow of fluid into the annulus from a reservoir; and

$\dot{p}_{ref}$, scaled with $\dfrac{V_a}{\beta_a}$, wherein $\dot{p}_{ref}$ is the rate of change of the said set pressure $p_{ref}$

More particularly, the step of calculating a desired extraction flow rate $q_c$ may comprise summing two or more of the evaluated terms.

The step of calculating a desired extraction flow rate $q_c$ may comprise summing one or more of the evaluated terms listed above, with a pressure offset term.

The step of calculating a desired extraction flow rate from the annulus may be additionally made in dependence upon a determined or estimated rate of change of a volume $\dot{V}_a$ of the wellbore, excluding the displacement volume of the tubing and any attached bottom hole apparatus.

The method may comprise determining a flow rate $q_{bit}$ through a bottom hole apparatus attached to an end of the tubing in order to provide said pumped flow rate into the annulus.

The step of calculating a desired extraction flow rate $q_c$ may comprise evaluating the equation

$$ q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g\left( p, p_{ref}, t \right) \right] $$

where $V_a$ is the volume of the wellbore annulus, $\dot{V}_a$ is the rate of change of $V_a$, $q_{bit}$ is the flow of fluid into the annulus through a bottom hole apparatus, $q_{res}$ is the flow of fluid into the annulus from a reservoir, $\dot{p}_{ref}$ is the rate of change of $p_{ref}$, $\beta_a$ is the effective bulk modulus of the fluid in the annulus, $K_p$ is the controller gain, and wherein at least two of $\alpha$, $\delta$, $\lambda$, $\phi$ and $\gamma = 1$, and each of the remaining two of $\alpha$, $\delta$, $\lambda$, $\phi$ and $\gamma = 0$ or 1. The function $g(p, p_{ref}, t)$ may be $p - p_{ref}$, or a nonlinear, time-varying, monotonically increasing function of $p - p_{ref}$. Argument $t$ in the function $g(p, p_{ref}, t)$ denotes that the g may also be dependent on time-varying inputs.

The step of setting the flow control device may comprise setting the operating points of one or more valves and/or pumps (e.g. a pressure back pump and/or downhole pump) in the extraction path.

By way of example, the well construction operation in which the method is employed may be one of: drilling; drilling during start and/or stop of a rig pump; drilling during power loss at the rig pump; tripping of a tubing into the well; cementing of the well; and fishing within the well.

According to a second aspect of the present invention there is provided a controller for controlling the pressure within an annulus during a well construction operation, the operation comprising pumping a fluid down a tubing and extracting the fluid that flows back through an annulus within said wellbore and surrounding the tubing, the controller comprising:

a pressure setting unit for defining a set pressure $p_{ref}$;
a flow rate determiner for calculating a desired extraction flow rate $q_c$ of fluid from said annulus in dependence upon the set pressure $p_{ref}$ and a pumped flow rate into the annulus; and
a flow rate setting unit for setting at least one flow control device in an extraction path using the calculated desired extraction flow rate to achieve said desired extraction flow rate in the fluid.

The controller may further comprise a processor for determining a rate of change of the set pressure, $\dot{p}_{ref}$.

According to a third aspect of the present invention there is provided a method of controlling the annular pressure in a well during a well contraction operation, the operation comprising pumping a fluid down a tubing located within the well and extracting the fluid that flows back through an annulus within said well and surrounding the tubing, the method comprising:

determining a fluid pressure $p$ within said annulus and determining a pressure offset of the determined pressure $p$ with respect to a set pressure $p_{ref}$;
using said pressure offset to calculate a desired extraction flow rate $q_c$ of fluid from said annulus; and
setting at least one flow control device in an extraction path using the calculated desired extraction flow rate to achieve said desired extraction flow rate in the fluid.

According to a fourth aspect of the present invention there is provided a controller for controlling the pressure within an annulus during a well construction operation, the operation comprising pumping a fluid down a tubing and extracting the fluid that flows back through an annulus within said wellbore and surrounding the tubing, the controller comprising:

a pressure monitor for determining a fluid pressure $p$ within said wellbore and for determining a pressure offset of the determined pressure $p$ with respect to a set pressure $p_{ref}$;
a flow rate determiner for using said pressure offset to calculate a desired extraction flow rate $q_c$ of fluid from said annulus; and
a flow rate setting unit for setting at least one flow control device in an extraction path using the calculated desired extraction flow rate to achieve said desired extraction flow rate in the fluid.

According to a fifth aspect of the present invention there is provided a method of controlling the annular pressure in a well during a well construction operation, the operation comprising pumping a fluid down a tubing located within the well and extracting the fluid that flows back through an annulus within said well and surrounding the tubing, the method comprising:

calculating a desired extraction flow rate $q_c$ of fluid from said annulus using a rate of change of volume $\dot{V}_a$ of a wellbore annulus and a pumped flow rate into the annulus; and
setting at least one flow control device in an extraction path using the calculated desired extraction flow rate to achieve said desired extraction flow rate in the fluid.

The method of this fifth aspect of the invention may comprise determining a fluid pressure $p$ within said annulus and determining a pressure offset of the determined pressure $p$ with respect to a set pressure $p_{ref}$, said step of calculating a desired extraction flow rate being additionally made in dependence upon said pressure offset. In this case, the step of determining a fluid pressure within the annulus may comprise measuring a fluid pressure at a downhole end of the annulus. The step of determining a fluid pressure within the annulus may comprise measuring a fluid pressure at a topside end of the annulus.

The step of calculating a desired extraction flow rate $q_c$ may comprise evaluating at least one of the following terms:

- $\dot{V}_a$, where $\dot{V}_a$ is the rate of change of the volume of a wellbore annulus within the system;
$q_{bit}$, wherein $q_{bit}$ is the flow of fluid into the annulus through a bottom hole apparatus;
$q_{res}$, wherein $q_{res}$ is the flow of fluid into the annulus from a reservoir; and

$\dot{p}_{ref}$, scaled with $\dfrac{V_a}{\beta_a}$, wherein $\dot{p}_{ref}$ is the rate of change of the said set pressure $p_{ref}$.

One or more of these may be added to a pressure offset term.

In particular, the step of calculating a desired extraction flow rate $q_c$ may comprise evaluating the equation

$$q_c = -\alpha \dot{V}_a + \delta q_{bit} + \lambda q_{res} + \phi \frac{V_a}{\beta_a}\dot{p}_{ref} + \gamma \left[ \frac{V_a}{\beta_a} K_p g\left(p, p_{ref}, t\right) \right].$$

At least certain embodiments of the invention can provide a controller structure which utilises a simple model of the dynamics of the annular downhole pressure in order to provide an improved method of pressure control during well construction operations, e.g. well drilling. Whereas existing in-use systems are based on conventional feedback control and do not utilise a knowledge of the system which is controlled, these embodiments provide a control structure which utilises the dominating inherent physical system properties to provide an intelligent compensation of the disturbances and operations that affect the pressure during drilling. Unlike the proposed solutions based upon Model-Predictive Control, the control structure has a simple structure which enables a simple and robust implementation. In particular, it does not require an advanced hydraulic model or extensive tuning of an empirical model. The control structure is physically justified and is flexible and modular. Since the control structure is based on a simple model with lumped physical parameters, it provides robust algorithms for automatic calibration and tuning.

Embodiments of the invention may improve pressure compensation during various operations such as pump ramp-up/shut-down and drill string movements. Compensation may also be provided for pressure fluctuation due to heave (when drilling from a floater), whilst the need to tune the controller during drilling may be reduced or even eliminated.

For a better understanding of the present invention and in order to show how the same may be carried into effect, reference will now be made by way of example to the accompanying drawings, in which:

> Figure 1 illustrates schematically a Managed Pressure Drilling (MPD) system;
> Figure 2 is a flow diagram of a Managed Pressure Drilling process; and
> Figure 3 illustrates schematically a controller of the Managed Pressure Drilling (MPD) system of Figure 1.

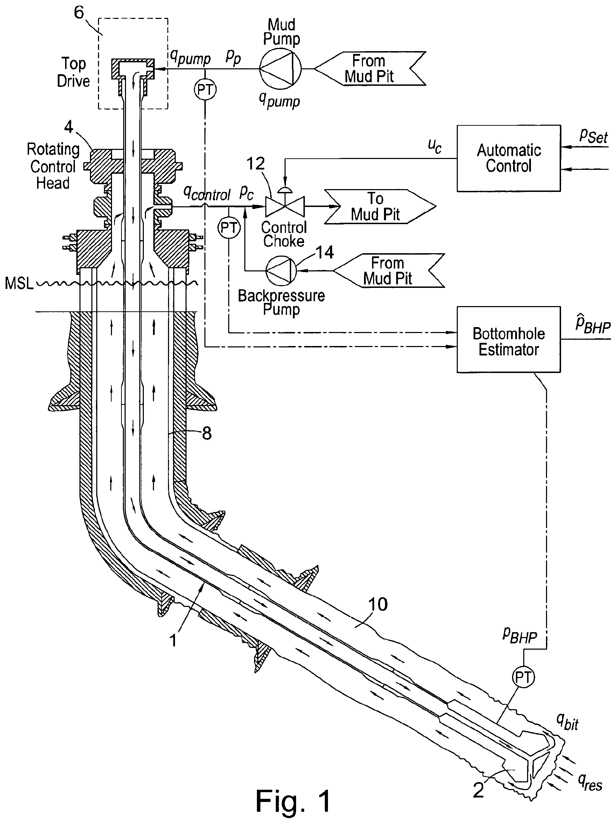

Figure 1 shows a Managed Pressure Drilling (MPD) system comprising a drill string 1 having a drill bit 2, a control head 4 and a top drive 6. A wellbore 8 defines an annulus 10 between the wellbore 8 and the drill string 1, and containing drilling fluid. During operation, drilling fluid is pumped from the top drive 6, at a flow $q_{pump}$, down the drill string 1 to power the drill bit 2. In most cases the rotation of the drill bit is powered by the top drive 6 which rotates the entire drill string. However, in some cases the fluid flow may also cause the rotation of the drill bit. Often, the fluid flow powers a turbine that generates power for downhole sensors and transmitters used transmit data signals to the surface by pulse telemetry. The drilling fluid exits through the drill bit 2 into the downhole annulus and returns up through the annulus 10. Upon reaching the topside of the annulus, the drilling fluid exits the annulus at a flow $q_c$. The flow rate $q_c$ is a variable that is controlled so as to maintain a predetermined pressure profile within the annulus 10. For example, the flow $q_c$ can be controlled by a control choke 12 and backpressure pump 14 which maintains sufficient backpressure within the MPD system. Fluid may also enter or exit the annulus 10 via the reservoir (for example through pores in the wellbore at a flow $q_{res}$.

The dynamics of the average pressure in the annulus 10 can be described by the model:

$$\frac{V_a}{\beta_a}\dot{p} = -\dot{V}_a + q_{bit} + q_{res} - q_c \qquad (1)$$

where $p$ is the annulus pressure (either downhole, or topside), $V_a$ is the annulus volume containing drilling fluid (in a "dual-gradient" system, only a part of the riser is filled with drilling fluid), which primarily depends on the length of the well and the position of the drill string, $\dot{V}_a$ is the rate of volume change, *i.e.* the time-derivative of the volume, and $\beta_a$ is the bulk modulus, which is a lumped parameter describing the effective stiffness of the liquid in the annulus, including the effect of entrained gas in the drilling fluid and the resulting flexibility of the drill string, casing and well. The flow $q_{bit}$ is the flow into the annulus through the drill bit, and $q_{res}$ is the effective reservoir influx, typically composed of influx from or loss to the reservoir, according to

$$q_{res} = q_{\inf lux} - q_{loss} \qquad (2)$$

The flow $q_c$ is the controlled flow out of the annulus topside which is typically composed of the flow through the choke manifold, and make-up from the back pressure pump according to

$$q_c = q_{choke1} + q_{choke2} - q_{back} \tag{3}$$

The simplified model, given by Equation (1), forms the basis for the pressure control method. It should be noted that by tuning the effective bulk modulus $\beta_a$, Equation (1) can be used to describe the pressure in the annulus at fixed locations in the well, such as the downhole end and the topside. This means that the controller structure based on Equation (1) can be applied to both a direct and indirect pressure control scheme.

In implementing a controller employing the model of Equation (1), it is assumed that the volume $V_a$ and its rate of change with time $\dot{V}_a$ can be measured or otherwise determined (or estimated), for example based upon the known length of the drill string within the wellbore, the cutting diameter of the drill bit, the diameter of the drill string, and the rate of movement of the string into and out of the wellbore. It is further assumed that the bit flow $q_{bit}$ is available, either measured directly, or estimated/computed from indirect measurements, and that the reservoir flow $q_{res}$ and the bulk modulus $\beta_a$ can be estimated, either offline or online.

Based on the above assumptions, the basic controller model can be given as

$$q_c = -\dot{V}_a + q_{bit} + q_{res} + \frac{V_a}{\beta_a} K_p \left( p - p_{ref} \right) \tag{4}$$

$$= \alpha_{ss} + \alpha_{pump} + \alpha_{res} + \alpha_{feedback} \tag{5}$$

where $p_{ref}$ is the desired pressure. The various terms of the controller structure have clear interpretations which are described in detail below. However, it will be appreciated that one or more of the terms may be removed from the model, whilst benefits over known MPD systems can still be obtained. It should be noted that, depending on the type of drilling operations to which the present invention is applied, some of the terms in Equation (4) may be removed. Terms may be removed temporarily depending upon drilling events. For example, the $\alpha_{feedback}$ term may be removed temporarily upon detection of a "kick" in the well, i.e. when a sizeable inflow of fluid into the well from the reservoir occurs, or when the drill string is rapidly moved within the wellbore. In such a case, the set pressure $p_{ref}$ becomes the pressure within the annulus immediately before the event (i.e. $\alpha_{feedback}$ is zero), such that the extraction rate is set to maintain the status quo within the well.

The first term in Equation (4) is

$$\alpha_{ss} = -\dot{V}_a \tag{6}$$

and is the feed-forward surge and swab compensation. This term compensates for the volume change and resulting pressure changes caused by movement of the drill string relative to the well. This term is thus important during tripping operations, and is particularly important in case of drilling from a floater in order to compensate for the pressure fluctuations caused by heave. This term provides an improvement over the conventional PI controller during such operations, thus improving transient performance and removing potential problems with integrator windup.

The second term in Equation (4) is

$$\alpha_{pump} = q_{bit} \tag{7}$$

and is the feed-forward compensation from the pump flow. This provides an improvement in the compensation of pressure fluctuations caused by startup/stop of the mud pumps compared to the conventional PI controller. Using $q_{bit}$, rather than the actual pump flow $q_{pump}$, also takes into account the transient periods of pressure build-up/down in the drill string during pump start/stop.

The third term in Equation (4) is

$$\alpha_{res} = q_{res} \tag{8}$$

which represents the compensation of the disturbance (represented here as influx from the reservoir), or the model error caused in the simplified model according to Equation (1). This term may be estimated to obtain integral action in the controller equivalent to the integral term in the conventional PI controller. $\alpha_{res}$ is not usually used to compensate reservoir flow, but rather compensates for other modelling errors in the design model.

The fourth and final term in Equation (4) is

$$\alpha_{feedback} = \frac{V_a}{\beta_a} K_p \left( p - p_{ref} \right) \qquad (9)$$

and is the feedback correction term which is needed to obtain good robustness and disturbance rejection properties of the controller. This term is equivalent to the proportional feedback control term $K_p(p-p_{ref})$ of the conventional PI controller. The scaling by $V_a / \beta_a$ implements a gain scheduling which eliminates the effect of volume change on the effective stiffness of the system. The scaling also compensates for changes in the effective bulk modulus (i.e. inverse of compressibility) of the system. This term mitigates any degradation in performance as drilling progresses and the increased volume causes the stiffness of the well to reduce. This term also enables the controller gain $K_p$ to be preset, thus eliminating the need to tune to individual wells.

In order to implement the controller structure according to the described model, it is necessary to control the total annulus flow by controlling the flow $q_c$ according to Equation (3). For example, this can be achieved by manipulating the flow through one of main chokes $q_{choke1}$ or $q_{choke2}$. Alternatively, the flow can be controlled by the flow through the make-up pump $q_{back}$, or by a combination of the chokes and the make-up pump.

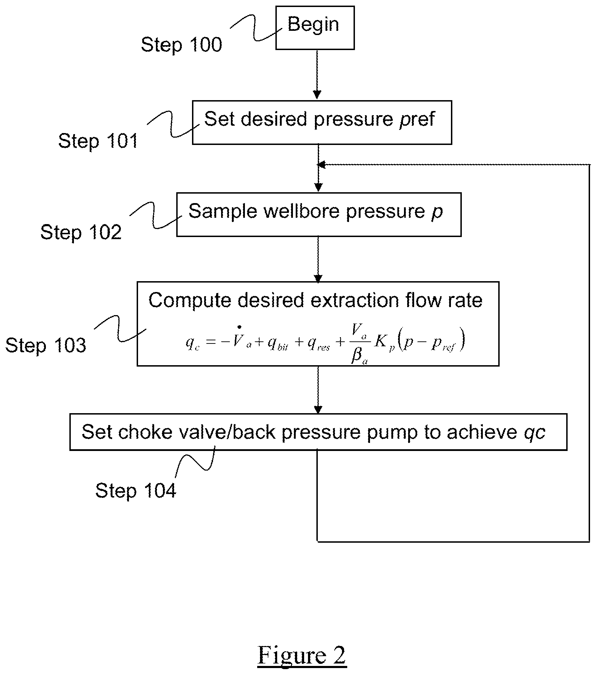

Figure 2 is a flow diagram illustrating the main steps in the MPD control process. The process begins at step 100, and at step 101 the desired pressure is set, for example by a skilled operator inputting this pressure into the control system. At step 102, the annular downhole pressure is sampled, e.g. by measuring the pressure in the open hole part from the last casing shoe to the bottom of the hole, e.g. at or close to the casing shoe or close to the drill bit, and relaying this to the topside control system. [The pressure may alternatively be sampled at other downhole locations.] At step 103, equation (4) above is evaluated, using the measured pressure and other measured or estimated parameters. At step 104, the evaluated fluid flow rate is used to set the operating points of the flow control devices, e.g. the choke valve and/or the back pressure pump.

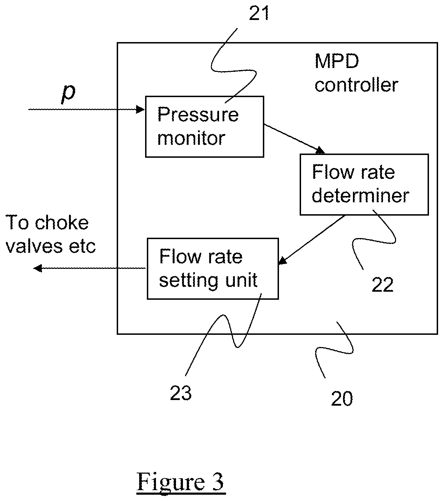

Figure 3 illustrates schematically a MPD controller 20 which may be implemented using, for example, an appropriately programmed computer. The controller comprises a pressure monitor 21 for determining a downhole annulus pressure at some predefined point in the open hole. This value may be provided directly from a pressure sensor, or may be estimated based upon some measured parameter(s). The pressure determined by the pressure monitor 21 is passed to a flow rate determinator 22 which is configured to evaluate equation (4) above. The determined extraction flow rate is then passed to a flow rate setting unit 23 which determines set (operating) points for the flow control device(s). The set values are distributed to the appropriate components in the extraction path.

The model defined by equation (4) above may be further enhanced by including a term relating to the rate of change of the desired pressure $p_{ref}$, namely $\dot{p}_{ref}$. The modified equation becomes:

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p \left( p - p_{ref} \right) \right] \qquad (10)$$

In practise, $p_{ref}$ and its time-derivative $\dot{p}_{ref}$ are derived simply by applying a filter so that $p_{ref}$ is actually a filtered version of the actual desired setpoint input $p_{ref}(0)$.

Referring to equations (4) and (10) above, it is further noted that the error term $(p-p_{ref})$ may be replaced by a generalised error function $g(p-p_{ref})$ where g is any appropriate non-linear, monotonically increasing function, possibly time varying. Examples include:

i) nonlinear, symmetric: $g(p, p_{ref}, t)=(p- p_{ref})^3$
ii) nonlinear, symmetric: $g(p, p_{ref}, t)=(p- p_{ref})+(p- p_{ref})^3$
iii) nonlinear, asymmetric: $g(p, p_{ref}, t)=p^3 - p_{ref}^2$
iv) nonlinear, symmetric, time varying: $g(p, p_{ref}, t)=(p- p_{ref})+(p- p_{ref})^3*exp(-t)$
v) linear, time varying $g(p, p_{ref}, t)=(p- p_{ref})*x(t)$, where x may be any time varying input.

It will be appreciated by the person of skill in the art that various modifications may be made to the above described embodiments without departing from the scope of the present invention. The control strategy may be used in many type of operations in the well construction process, ranging from drilling to completion, such as for example pressure control during cementing, fishing of broken drill pipe, or well control situations (e.g. start and/or stop of a rig pump and power loss at the rig pump), etc. The control strategy is applicable in dual gradient systems, where there is typically a subsea pump which extracts drilling fluid from the annulus at some location between the seabed and the topside, and which allows manipulation of the level of drilling fluid in the riser. The drill bit referred to in the embodiment described above is, in this case, only an example of a bottom hole apparatus that is attached to the tubing.

## Claims

1. A method of controlling the annular pressure in a well during a well construction operation, the operation comprising pumping a fluid down a tubing (1) located within the well (8) and extracting the fluid that flows back through an annulus (10) within said well and surrounding the tubing, the method comprising, and being **characterised by**:

   defining a set pressure $p_{ref}$ (101);
   calculating a desired extraction flow rate $q_c$ of fluid from said annulus, in dependence upon the set pressure $p_{ref}$ and a pumped flow rate into the annulus (103); and
   setting at least one flow control device (12, 14) in an extraction path using the calculated desired extraction flow rate, to achieve said desired extraction flow rate in the fluid (104).

2. A method according to claim 1, said step of calculating a desired extraction flow rate (103) being additionally made in dependence upon a determined or estimated influx or efflux $q_{res}$ through the well walls or a part of the well walls.

3. A method according to claim 1 or 2 and comprising determining a fluid pressure $p$ within said annulus and determining a pressure offset of the determined pressure $p$ with respect to said set pressure $p_{ref}$, said step of calculating a desired extraction flow rate (103) being additionally made in dependence upon said pressure offset.

4. A method according to claim 3, wherein said step of determining a fluid pressure within the annulus (10) comprises measuring a fluid pressure at a downhole end of the annulus (10).

5. A method according to claim 3, wherein said step of determining a fluid pressure within the annulus (10) comprises measuring a fluid pressure at a topside end of the annulus (10).

6. A method according to any one of claims 3 to 5, wherein a step of using said pressure offset to calculate a desired extraction flow rate of fluid from the annulus comprises scaling said pressure offset to compensate for compression of the fluid within the annulus.

7. A method according to any one of claims 3 to 6, wherein said pressure offset is scaled by a factor $V_a/\beta_a$, where $V_a$ is the volume of said annulus and $\beta_a$ is the effective bulk modulus of the fluid within said annulus.

8. A method according to any one of claims 3 to 7, wherein said step of using said pressure offset to calculate a desired extraction flow rate of fluid from the annulus (10) comprises further scaling said pressure offset by a constant gain factor $K_p$.

9. A method according to any one of the preceding claims, wherein said step of calculating a desired extraction flow rate $q_c$ (103) comprises evaluating at least one of the following terms:

   - $\dot{V}_a$, where $\dot{V}_a$ is the rate of change of the volume of a wellbore annulus within the system;
   $q_{bit}$, wherein $q_{bit}$ is the flow of fluid into the annulus through a bottom hole apparatus; and
   $q_{res}$, wherein $q_{res}$ is the flow of fluid into the annulus from a reservoir.

10. A method according to claim 9, wherein said step of calculating a desired extraction flow rate $q_c$ (103) comprises summing two or more of the evaluated terms.

11. A method according to claim 9 when appended to any one of claims 3 to 8, wherein said step of calculating a desired extraction flow rate $q_c$ (103) comprises summing one or more of the evaluated terms with a pressure offset term.

12. A method according to claim 1 or 2, said step of calculating a desired extraction flow rate (103) from the annulus being additionally made in dependence upon a determined or estimated rate of change of a volume $\overset{\bullet}{V}_a$ of the wellbore, excluding the displacement volume of the tubing and any attached bottom hole apparatus.

13. A method according to claim 1 or 2, and comprising determining a flow rate $q_{bit}$ through a bottom hole apparatus attached to an end of the tubing in order to provide said pumped flow rate into the annulus.

14. A method according to any one of the preceding claims, wherein said step of setting the flow control device (104) comprises setting the operating points of one or more valves and/or a pressure back pump in the extraction path.

15. A method according to any one of the preceding claims, wherein said well construction operation is one of: drilling; drilling during start and/or stop of a rig pump; drilling during power loss at the rig pump; tripping of a tubing into the well; cementing of the well; and fishing within the well.

16. A method of controlling the annular pressure in a well (8) during a well construction operation, the operation comprising pumping a fluid down a tubing (1) located within the well (8) and extracting the fluid that flows back through an annulus (10) within said well and surrounding the tubing, the method comprising, and being **characterised by**:

    determining a fluid pressure $p$ within said annulus and determining a pressure offset of the determined pressure $p$ with respect to a set pressure $p_{ref}$ (101, 102);
    using said pressure offset to calculate a desired extraction flow rate $q_c$ of fluid from said annulus (103); and setting at least one flow control device in an extraction path using the calculated desired extraction flow rate to achieve said desired extraction flow rate in the fluid (104).

17. A method of controlling the annular pressure in a well (8) during a well construction operation, the operation comprising pumping a fluid down a tubing (1) located within the well (8) and extracting the fluid that flows back through an annulus (10) within said well and surrounding the tubing, the method comprising, and being **characterised by**:

    calculating a desired extraction flow rate $q_c$ of fluid from said annulus using a rate of change of volume $\overset{\bullet}{V}_a$ of a wellbore annulus and a pumped flow rate into the annulus (103); and
    setting at least one flow control device in an extraction path using the calculated desired extraction flow rate to achieve said desired extraction flow rate in the fluid (104).

18. A method according to any one of claims 1, 16 or 17, said step of calculating a desired extraction flow rate $q_c$ (103) comprising evaluating the equation

$$q_c = -\alpha \overset{\bullet}{V}_a + \delta q_{bit} + \lambda q_{res} + \gamma \left[ \frac{V_a}{\beta_a} K_p \left( p - p_{ref} \right) \right]$$

where $V_a$ is the volume of the wellbore annulus, $\overset{\bullet}{V}_a$ is the rate of change of $V_a$, $q_{bit}$ is the flow of fluid into the annulus through a bottom hole apparatus, $q_{res}$ is the flow of fluid into the annulus from a reservoir, $\beta_a$ is the effective bulk modulus of the fluid in the annulus, $K_p$ is the controller gain, and wherein at least two of $\alpha,\ \delta,\ \lambda$ and $\gamma = 1$, and each of the remaining two of $\alpha,\ \delta,\ \lambda$ and $\gamma = 0$ or 1.

19. A method according to any one of claims 1, 16 or 17, said step of calculating a desired extraction flow rate $q_c$ (103) comprising evaluating the equation

$$q_c = -\alpha \overset{\bullet}{V}_a + \delta q_{bit} + \lambda q_{res} + \phi \frac{V_a}{\beta_a} \dot{p}_{ref} + \gamma \left[ \frac{V_a}{\beta_a} K_p\, g \left( p, p_{ref}, t \right) \right]$$

where $V_a$ is the volume of the wellbore annulus, $\dot{V}_a$ is the rate of change of $V_a$, $q_{bit}$ is the flow of fluid into the annulus through a bottom hole apparatus, $q_{res}$ is the flow of fluid into the annulus from a reservoir, $\beta_a$ is the effective bulk modulus of the fluid in the annulus, $K_p$ is the controller gain, g is $p - p_{ref}$ or a nonlinear, time-varying, monotonically increasing function of $p - p_{ref}$, and wherein at least two of $\alpha, \delta \lambda, \phi$ and $\gamma = 1$, and each of the remaining two of $\alpha, \delta, \lambda, \phi$ and $\gamma = 0$ or 1.

20. A controller (20) for controlling the pressure within an annulus (10) during a well construction operation, the operation comprising pumping a fluid down a tubing (1) and extracting the fluid that flows back through an annulus (10) within said wellbore (8) and surrounding the tubing, the controller (20) comprising, and **characterised by**:

a pressure setting unit for defining a set pressure $p_{ref}$;
a flow rate determiner (22) for calculating a desired extraction flow rate $q_c$ of fluid from said annulus in dependence upon the set pressure $p_{ref}$ and a pumped flow rate into the annulus; and
a flow rate setting unit (23) for setting at least one flow control device in an extraction path using the calculated desired extraction flow rate to achieve said desired extraction flow rate in the fluid.

21. A controller (20) for controlling the pressure within an annulus (10) during a well construction operation, the operation comprising pumping a fluid down a tubing (1) and extracting the fluid that flows back through an annulus (10) within said wellbore (8) and surrounding the tubing, the controller (20) comprising and **characterised by**:

a pressure monitor (21) for determining a fluid pressure $p$ within said wellbore and for determining a pressure offset of the determined pressure $p$ with respect to a set pressure $p_{ref}$;
a flow rate determiner (22) for using said pressure offset to calculate a desired extraction flow rate $q_c$ of fluid from said annulus; and
a flow rate setting unit (23) for setting at least one flow control device in an extraction path using the calculated desired extraction flow rate to achieve said desired extraction flow rate in the fluid.

22. A controller according to claim 20 or 21, said flow rate determiner (22) being configured to calculate a desired extraction flow rate $q_c$ by evaluating the equation

$$q_c = -\alpha \dot{V}_a + \delta q_{bit} + \lambda q_{res} + \gamma \left[ \frac{V_a}{\beta_a} K_p \left( p - p_{ref} \right) \right]$$

where $V_a$ is the volume of the wellbore annulus, $\dot{V}_a$ is the rate of change of $V_a$, $q_{bit}$ is the flow of fluid into the annulus through a bottom hole apparatus, $q_{res}$ is the flow of fluid into the annulus from a reservoir, $\beta_a$ is the effective bulk modulus of the fluid in the annulus, $K_p$ is the controller gain, and wherein at least two of $\alpha, \delta, \lambda$ and $\gamma = 1$, and each of the remaining two of $\alpha, \delta, \lambda$ and $\gamma = 0$ or 1.

23. A controller according to claim 20 or 21, said flow rate determiner (22) being configured to calculate a desired extraction flow rate $q_c$ by evaluating the equation

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g \left( p, p_{ref}, t \right) \right]$$

where $V_a$ is the volume of the wellbore annulus, $\dot{V}_a$ is the rate of change of $V_a$, $q_{bit}$ is the flow of fluid into the annulus through a bottom hole apparatus, $q_{res}$ is the flow of fluid into the annulus from a reservoir, $\beta_a$ is the effective bulk modulus of the fluid in the annulus, $K_p$ is the controller gain, , g is $p - p_{ref}$ or a nonlinear, time-varying, monotonically increasing function of $p - p_{ref}$, and wherein at least two of $\alpha, \delta \lambda, \phi$ and $\gamma = 1$, and each of the remaining two

of $\alpha$, $\delta$, $\lambda$, $\phi$ and $\gamma$ = 0 or 1.

**Patentansprüche**

1. Verfahren zum Regeln des Ringspaltdrucks in einem Bohrloch während einer Bohrloch-Aufbauoperation, wobei die Operation das Pumpen eines Fluids eine Verrohrung (1) hinab, die innerhalb des Bohrlochs (8) angeordnet ist, und Extrahieren des Fluids, das durch einen Ringspalt (10) innerhalb des Bohrlochs, und der die Verrohrung umgibt, zurückfließt, umfasst, wobei das Verfahren Folgendes umfasst und **gekennzeichnet ist durch**:

   Definieren eines Solldrucks $p_{ref}$ (101),
   Berechnen einer gewünschten Extraktionsdurchflussmenge $q_c$ an Fluid aus dem Ringspalt, in Abhängigkeit von dem Solldruck $p_{ref}$ und einer gepumpten Durchflussmenge in den Ringspalt (103) und
   Einstellen wenigstens einer Durchfluss-Regeleinrichtung (12, 14) in einer Extraktionsbahn unter Verwendung der berechneten gewünschten Extraktionsdurchflussmenge, um die gewünschte Extraktionsdurchflussmenge in dem Fluid (104) zu erreichen.

2. Verfahren nach Anspruch 1, wobei der Schritt des Berechnens einer gewünschten Extraktionsdurchflussmenge (103) zusätzlich in Abhängigkeit von einem vorbestimmten oder geschätzten Einfluss oder Ausfluss $q_{res}$ durch die Bohrlochwände oder einen Teil der Bohrlochwände vorgenommen wird.

3. Verfahren nach Anspruch 1 oder 2 und welches das Bestimmen eines Fluiddrucks $p$ innerhalb des Ringspalts und das Bestimmen eines Druckversatzes des bestimmten Drucks $p$ in Bezug auf den Solldruck $p_{ref}$ umfasst, wobei der Schritt des Berechnens einer gewünschten Extraktionsdurchflussmenge (103) zusätzlich in Abhängigkeit von dem Druckversatz vorgenommen wird.

4. Verfahren nach Anspruch 3, wobei der Schritt des Bestimmens eines Fluiddrucks innerhalb des Ringspalts (10) das Messen eines Fluiddrucks an einem Bohrlochsohlenende des Ringspalts (10) umfasst.

5. Verfahren nach Anspruch 3, wobei der Schritt des Bestimmens eines Fluiddrucks innerhalb des Ringspalts (10) das Messen eines Fluiddrucks an einem oberen Ende des Ringspalts (10) umfasst.

6. Verfahren nach einem der Ansprüche 3 bis 5, wobei ein Schritt des Verwendens des Druckversatzes, um eine gewünschte Extraktionsdurchflussmenge an Fluid aus dem Ringspalt zu berechnen, das Skalieren des Druckversatzes, um eine Kompression des Fluids innerhalb des Ringspalts auszugleichen, umfasst.

7. Verfahren nach einem der Ansprüche 3 bis 6, wobei der Druckversatz um einen Faktor $V_a/\beta_a$ skaliert wird, wobei $V_a$ das Volumen des Ringspalts ist und $\beta_a$ der wirksame Kompressionsmodul des Fluids innerhalb des Ringspalts ist.

8. Verfahren nach einem der Ansprüche 3 bis 7, wobei der Schritt des Verwendens des Druckversatzes, um eine gewünschte Extraktionsdurchflussmenge an Fluid aus dem Ringspalt (10) zu berechnen, das weitere Skalieren des Druckversatzes um einen konstanten Verstärkungsfaktor $K_p$ umfasst.

9. Verfahren nach einem der vorhergehenden Ansprüche, wobei der Schritt des Berechnens einer gewünschten Extraktionsdurchflussmenge $q_c$ (103) das Auswerten wenigstens eines der folgenden Terme umfasst:

   $-\dot{V}_a$, wobei $\dot{V}_a$ die Veränderungsgeschwindigkeit des Volumens eines Bohrloch-Ringspalts innerhalb des Systems ist,
   $q_{bit}$, wobei $q_{bit}$ der Fluss von Fluid in den Ringspalt durch eine Bohrlochsohlenvorrichtung ist, und
   $q_{res}$, wobei $q_{res}$ der Fluss von Fluid in den Ringspalt aus einem Reservoir ist.

10. Verfahren nach Anspruch 9, wobei der Schritt des Berechnens einer gewünschten Extraktionsdurchflussmenge $q_c$ (103) das Summieren von zwei oder mehr der ausgewerteten Terme umfasst.

11. Verfahren nach Anspruch 9, wenn abhängig von einem der Ansprüche 3 bis 8, wobei der Schritt des Berechnens einer gewünschten Extraktionsdurchflussmenge $q_c$ (103) das Summieren eines oder mehrerer der ausgewerteten Terme mit einem Druckversatzterm umfasst.

12. Verfahren nach Anspruch 1 oder 2, wobei der Schritt des Berechnens einer gewünschten Extraktionsdurchflussmenge (103) aus dem Ringspalt zusätzlich in Abhängigkeit von einer bestimmten oder geschätzten Veränderungs-geschwindigkeit eines Volumens $\dot{V}_a$ des Bohrlochs, ausschließlich des Verdrängungsvolumens der Verrohrung und jeglicher befestigter Bohrlochsohlenvorrichtung, vorgenommen wird.

13. Verfahren nach Anspruch 1 oder 2 und welches das Bestimmen einer Durchflussmenge $q_{bit}$ durch eine an einem Ende der Verrohrung befestigte Bohrlochsohlenvorrichtung umfasst, um die gepumpte Durchflussmenge in den Ringspalt bereitzustellen.

14. Verfahren nach einem der vorhergehenden Ansprüche, wobei der Schritt des Einstellens der Durchfluss-Regeleinrichtung (104) das Einstellen der Arbeitspunkte eines oder mehrerer Ventile und/oder einer Gegendruckpumpe in der Extraktionsbahn umfasst.

15. Verfahren nach einem der vorhergehenden Ansprüche, wobei die Bohrloch-Aufbauoperation eines von Folgendem ist: Bohren, Bohren während des Startens und/oder Anhaltens einer Bohranlagenpumpe, Bohren während Leistungsverlust an der Bohranlagenpumpe, Ausklinken einer Verrohrung in das Bohrloch, Zementieren des Bohrlochs und Fischen innerhalb des Bohrlochs.

16. Verfahren zum Regeln des Ringspaltdrucks in einem Bohrloch (8) während einer Bohrloch-Aufbauoperation, wobei die Operation das Pumpen eines Fluids eine Verrohrung (1) hinab, die innerhalb des Bohrlochs (8) angeordnet ist, und Extrahieren des Fluids, das durch einen Ringspalt (10) innerhalb des Bohrlochs, und der die Verrohrung umgibt, zurückfließt, umfasst, wobei das Verfahren Folgendes umfasst und **gekennzeichnet ist durch**:

Bestimmen eines Fluiddrucks $p$ innerhalb des Ringspalts und das Bestimmen eines Druckversatzes des bestimmten Drucks $p$ in Bezug auf einen Solldruck $p_{ref}$ (101, 102),
Verwenden des Druckversatzes, um eine gewünschte Extraktionsdurchflussmenge $q_c$ an Fluid aus dem Ringspalt zu berechnen (103), und
Einstellen wenigstens einer Durchfluss-Regeleinrichtung in einer Extraktionsbahn unter Verwendung der berechneten gewünschten Extraktionsdurchflussmenge, um die gewünschte Extraktionsdurchflussmenge in dem Fluid zu erreichen (104).

17. Verfahren zum Regeln des Ringspaltdrucks in einem Bohrloch (8) während einer Bohrloch-Aufbauoperation, wobei die Operation das Pumpen eines Fluids eine Verrohrung (1) hinab, die innerhalb des Bohrlochs (8) angeordnet ist, und Extrahieren des Fluids, das durch einen Ringspalt (10) innerhalb des Bohrlochs, und der die Verrohrung umgibt, zurückfließt, umfasst, wobei das Verfahren Folgendes umfasst und **gekennzeichnet ist durch**:

Berechnen einer gewünschten Extraktionsdurchflussmenge $q_c$ an Fluid aus dem Ringspalt unter Verwendung einer Veränderungsgeschwindigkeit eines Volumens $\dot{V}_a$ eines Bohrloch-Ringspalts und einer gepumpten Durchflussmenge in den Ringspalt (103) und
Einstellen wenigstens einer Durchfluss-Regeleinrichtung in einer Extraktionsbahn unter Verwendung der berechneten gewünschten Extraktionsdurchflussmenge, um die gewünschte Extraktionsdurchflussmenge in dem Fluid zu erreichen (104).

18. Verfahren nach einem der Ansprüche 1, 16 oder 17, wobei der Schritt des Berechnens einer gewünschten Extraktionsdurchflussmenge $q_c$ (103) das Auswerten der folgenden Gleichung umfasst:

$$q_c = -\alpha \dot{V}_a + \delta q_{bit} + \lambda q_{res} + \gamma \left[ \frac{V_a}{\beta_a} K_p \left( p - p_{ref} \right) \right],$$

wobei $V_a$ das Volumen des Ringspalts ist, $\dot{V}_a$ die Veränderungsgeschwindigkeit von $V_a$ ist, $q_{bit}$ der Fluss von Fluid in den Ringspalt durch eine Bohrlochsohlenvorrichtung ist, $q_{res}$ der Fluss von Fluid in den Ringspalt aus einem Reservoir ist, $\beta_a$ der wirksame Kompressionsmodul des Fluids in dem Ringspalt ist, $K_p$ die Reglerverstärkung ist und wobei wenigstens zwei von $\alpha,\ \delta,\ \lambda$ und $\gamma = 1$ und jedes der verbleibenden zwei von $\alpha,\ \delta,\ \lambda$ und $\gamma = 0$ oder 1.

19. Verfahren nach einem der Ansprüche 1, 16 oder 17, wobei der Schritt des Berechnens einer gewünschten Extraktionsdurchflussmenge $q_c$ (103) das Auswerten der folgenden Gleichung umfasst:

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g \left( p, p_{ref}, t \right) \right],$$

wobei $V_a$ das Volumen des Ringspalts ist, $\dot{V}_a$ die Veränderungsgeschwindigkeit von $V_a$ ist, $q_{bit}$ der Fluss von Fluid in den Ringspalt durch eine Bohrlochsohlenvorrichtung ist, $q_{res}$ der Fluss von Fluid in den Ringspalt aus einem Reservoir ist, $\beta_a$ der wirksame Kompressionsmodul des Fluids in dem Ringspalt ist, $K_p$ die Reglerverstärkung ist, $g\, p - p_{ref}$ oder eine nichtlineare, sich zeitlich verändernde, monoton wachsende Funktion von $p - p_{ref}$ ist und wobei wenigstens zwei von $\alpha,\ \beta,\ \lambda,\ \phi$ und $\gamma = 1$ und jedes der verbleibenden zwei von $\alpha,\ \beta,\ \lambda,\ \phi$ und $\gamma = 0$ oder 1.

20. Steuergerät (20) zum Regeln des Drucks innerhalb eines Ringspalts (10) während einer Bohrloch-Aufbauoperation, wobei die Operation das Pumpen eines Fluids eine Verrohrung (1) hinab und Extrahieren des Fluids, das durch einen Ringspalt (10) innerhalb des Bohrlochs (8), und der die Verrohrung umgibt, zurückfließt, umfasst, wobei das Steuergerät (20) Folgendes umfasst und **gekennzeichnet ist durch**:

    eine Druckeinstellungseinheit zum Definieren eines Solldrucks $p_{ref}$,
    eine Durchflussmengen-Bestimmungseinrichtung (22) zum Berechnen einer gewünschten Extraktionsdurchflussmenge $q_c$ an Fluid aus dem Ringspalt, in Abhängigkeit von dem Solldruck $p_{ref}$ und einer gepumpten Durchflussmenge in den Ringspalt und
    eine Durchflussmengen-Einstellungseinheit (23) zum Einstellen wenigstens einer Durchfluss-Regeleinrichtung in einer Extraktionsbahn unter Verwendung der berechneten gewünschten Extraktionsdurchflussmenge, um die gewünschte Extraktionsdurchflussmenge in dem Fluid zu erreichen.

21. Steuergerät (20) zum Regeln des Drucks innerhalb eines Ringspalts während einer Bohrloch-Aufbauoperation, wobei die Operation das Pumpen eines Fluids eine Verrohrung (1) hinab und Extrahieren des Fluids, das durch einen Ringspalt (10) innerhalb des Bohrlochs (8), und der die Verrohrung umgibt, zurückfließt, umfasst, wobei das Steuergerät (20) Folgendes umfasst und **gekennzeichnet ist durch**:

    eine Drucküberwachungseinrichtung (21) zum Bestimmen eines Fluiddrucks $p$ innerhalb des Ringspalts und zum Bestimmen eines Druckversatzes des bestimmten Drucks $p$ in Bezug auf den Solldruck $p_{ref}$,
    eine Durchflussmengen-Bestimmungseinrichtung (22) zum Verwenden des Druckversatzes, um eine gewünschte Extraktionsdurchflussmenge $q_c$ an Fluid aus dem Ringspalt zu berechnen, und
    eine Durchflussmengen-Einstellungseinheit (23) zum Einstellen wenigstens einer Durchfluss-Regeleinrichtung in einer Extraktionsbahn unter Verwendung der berechneten gewünschten Extraktionsdurchflussmenge, um die gewünschte Extraktionsdurchflussmenge in dem Fluid zu erreichen.

22. Steuergerät nach Anspruch 20 oder 21, wobei die Durchflussmengen-Bestimmungseinrichtung (22) dafür konfiguriert ist, eine gewünschte Extraktionsdurchflussmenge $q_c$ durch Auswerten der folgenden Gleichung zu berechnen:

$$q_c = -\alpha \dot{V}_a + \delta q_{bit} + \lambda q_{res} + \gamma \left[ \frac{V_a}{\beta_a} K_p \left( p - p_{ref} \right) \right],$$

wobei $V_a$ das Volumen des Ringspalts des Bohrlochs ist, $\dot{V}_a$ die Veränderungsgeschwindigkeit von $V_a$ ist, $q_{bit}$ der Fluss von Fluid in den Ringspalt durch eine Bohrlochsohlenvorrichtung ist, $q_{res}$ der Fluss von Fluid in den Ringspalt aus einem Reservoir ist, $\beta_a$ der wirksame Kompressionsmodul des Ringspalts ist, $K_p$ die Reglerverstärkung ist und wobei wenigstens zwei von $\alpha,\ \delta,\ \lambda$ und $\gamma = 1$ und jedes der verbleibenden zwei von $\alpha,\ \delta,\ \lambda$ und $\gamma = 0$ oder 1.

23. Steuergerät nach Anspruch 20 oder 21, wobei die Durchflussmengen-Bestimmungseinrichtung (22) dafür konfiguriert ist, eine gewünschte Extraktionsdurchflussmenge $q_c$ durch Auswerten der folgenden Gleichung zu berechnen:

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g\left(p, p_{ref}, t\right) \right] ,$$

wobei $V_a$ das Volumen des Ringspalts des Bohrlochs ist, $\dot{V}_a$ die Veränderungsgeschwindigkeit von $V_a$ ist, $q_{bit}$ der Fluss von Fluid in den Ringspalt durch eine Bohrlochsohlenvorrichtung ist, $q_{res}$ der Fluss von Fluid in den Ringspalt aus einem Reservoir ist, $\beta_a$ der wirksame Kompressionsmodul des Fluids in dem Ringspalt ist, $K_p$ die Reglerverstärkung ist, $g$ $p$ - $p_{ref}$ oder eine nichtlineare, sich zeitlich verändernde, monoton wachsende Funktion von $p$ - $p_{ref}$ ist und wobei wenigstens zwei von $\alpha, \delta, \lambda, \phi$ und $\gamma = 1$ und jedes der verbleibenden zwei von $\alpha, \delta, \lambda, \phi$ und $\gamma = 0$ oder 1.

## Revendications

1. Procédé de contrôle de la pression annulaire dans un puits pendant une opération de construction de puits, l'opération comprenant le pompage d'un fluide vers le bas d'une colonne d'exploitation (1) qui est localisée à l'intérieur du puits (8) et l'extraction du fluide qui reflue au travers d'un annulus (10) à l'intérieur dudit puits et en entourant la colonne d'exploitation, le procédé comprenant et étant **caractérisé par** :

   la définition d'une pression de consigne $p_{ref}$ (101) ;
   le calcul d'un débit d'extraction souhaité $q_c$ du fluide à partir dudit annulus, en fonction de la pression de consigne $p_{ref}$ et d'un débit pompé à l'intérieur de l'annulus (103) ; et
   l'établissement d'au moins un dispositif de contrôle d'écoulement (12, 14) dans une voie d'extraction en utilisant le débit d'extraction souhaité calculé, afin de réaliser ledit débit d'extraction souhaité dans le fluide (104).

2. Procédé selon la revendication 1, dans lequel ladite étape de calcul d'un débit d'extraction souhaité (103) est de façon additionnelle réalisée en fonction d'un flux entrant ou d'un flux sortant déterminé ou estimé $q_{res}$ au travers des parois de puits ou d'une partie des parois de puits.

3. Procédé selon la revendication 1 ou 2, et comprenant la détermination d'une pression de fluide $p$ à l'intérieur dudit annulus et la détermination d'un décalage de pression de la pression déterminée $p$ par rapport à ladite pression de consigne $p_{ref}$, ladite étape de calcul d'un débit d'extraction souhaité (103) étant de façon additionnelle réalisée en fonction dudit décalage de pression.

4. Procédé selon la revendication 3, dans lequel ladite étape de détermination d'une pression de fluide à l'intérieur de l'annulus (10) comprend la mesure d'une pression de fluide au niveau d'une extrémité de fond de puits de l'annulus (10).

5. Procédé selon la revendication 3, dans lequel ladite étape de détermination d'une pression de fluide à l'intérieur de l'annulus (10) comprend la mesure d'une pression de fluide au niveau d'une extrémité de côté de sommet de l'annulus (10).

6. Procédé selon l'une quelconque des revendications 3 à 5, dans lequel une étape d'utilisation dudit décalage de pression pour calculer un débit d'extraction souhaité du fluide à partir de l'annulus comprend la mise à l'échelle dudit décalage de pression afin de compenser une compression du fluide à l'intérieur de l'annulus.

7. Procédé selon l'une quelconque des revendications 3 à 6, dans lequel ledit décalage de pression est mis à l'échelle au moyen d'un facteur $V_a/\beta_a$, où $V_a$ est le volume dudit annulus et $\beta_a$ est le module d'élasticité volumique effectif du fluide à l'intérieur dudit annulus.

8. Procédé selon l'une quelconque des revendications 3 à 7, dans lequel ladite étape d'utilisation dudit décalage de pression pour calculer un débit d'extraction souhaité du fluide à partir de l'annulus (10) comprend la mise à l'échelle ultérieure dudit décalage de pression au moyen d'un facteur de gain constant $K_p$.

9. Procédé selon l'une quelconque des revendications qui précèdent, dans lequel ladite étape de calcul d'un débit d'extraction souhaité $q_c$ (103) comprend l'évaluation d'au moins l'un des termes qui suivent :

   - $\dot{V}_a$, où $\dot{V}_a$ est le taux de variation du volume d'un annulus de puits de forage à l'intérieur du système ;

$q_{bit}$, où $q_{bit}$ est l'écoulement de fluide à l'intérieur de l'annulus au travers d'un appareil de trou de fond ; et $q_{res}$, où $q_{res}$ est l'écoulement du fluide à l'intérieur de l'annulus à partir d'un réservoir.

10. Procédé selon la revendication 9, dans lequel ladite étape de calcul d'un débit d'extraction souhaité $q_c$ (103) comprend la sommation de deux ou plus des termes évalués.

11. Procédé selon la revendication 9 lorsqu'elle dépend de l'une quelconque des revendications 3 à 8, dans lequel ladite étape de calcul d'un débit d'extraction souhaité $q_c$ (103) comprend la sommation d'un ou de plusieurs des termes évalués avec un terme de décalage de pression.

12. Procédé selon la revendication 1 ou 2, dans lequel ladite étape de calcul d'un débit d'extraction souhaité (103) à partir de l'annulus est de façon additionnelle réalisée en fonction d'un taux de variation déterminé ou estimé d'un volume $\dot{V}_a$ du puits de forage, à l'exclusion du volume de déplacement de la colonne d'exploitation et d'un quelconque appareil de trou de fond lié.

13. Procédé selon la revendication 1 ou 2, et comprenant la détermination d'un débit $q_{bit}$ au travers d'un appareil de trou de fond qui est lié à une extrémité de la colonne d'exploitation afin de produire ledit débit pompé à l'intérieur de l'annulus.

14. Procédé selon l'une quelconque des revendications qui précèdent, dans lequel ladite étape d'établissement du dispositif de contrôle d'écoulement (104) comprend l'établissement des points de fonctionnement d'une ou de plusieurs vanne(s) et/ou d'une pompe de retour de pression dans la voie d'extraction.

15. Procédé selon l'une quelconque des revendications qui précèdent, dans lequel ladite opération de construction de puits est une opération prise parmi : un forage ; un forage pendant le démarrage et/ou l'arrêt d'une pompe d'une installation de forage ; un forage pendant une perte de puissance au niveau de la pompe de l'installation de forage ; une manoeuvre d'une colonne d'exploitation à l'intérieur du puits ; une cémentation du puits ; et un repêchage à l'intérieur du puits.

16. Procédé de contrôle de la pression annulaire dans un puits (8) pendant une opération de construction de puits, l'opération comprenant le pompage d'un fluide vers le bas d'une colonne d'exploitation (1) qui est localisée à l'intérieur du puits (8) et l'extraction du fluide qui reflue au travers d'un annulus (10) à l'intérieur dudit puits et en entourant la colonne d'exploitation, le procédé comprenant et étant **caractérisé par** :

la détermination d'une pression de fluide $p$ à l'intérieur dudit annulus et la détermination d'un décalage de pression de la pression déterminée $p$ par rapport à une pression de consigne $p_{ref}$ (101, 102) ;
l'utilisation dudit décalage de pression pour calculer un débit d'extraction souhaité $q_c$ du fluide à partir dudit annulus (103) ; et
l'établissement d'au moins un dispositif de contrôle d'écoulement dans une voie d'extraction en utilisant le débit d'extraction souhaité calculé afin de réaliser ledit débit d'extraction souhaité dans le fluide (104).

17. Procédé de contrôle de la pression annulaire dans un puits (8) pendant une opération de construction de puits, l'opération comprenant le pompage d'un fluide vers le bas d'une colonne d'exploitation (1) qui est localisée à l'intérieur du puits (8) et l'extraction du fluide qui reflue au travers d'un annulus (10) à l'intérieur dudit puits et en entourant la colonne d'exploitation, le procédé comprenant et étant **caractérisé par** :

le calcul d'un débit d'extraction souhaité $q_c$ du fluide à partir dudit annulus en utilisant un taux de variation de volume $\dot{V}_a$ d'un annulus de puits de forage et un débit pompé à l'intérieur de l'annulus (103) ; et
l'établissement d'au moins un dispositif de contrôle d'écoulement dans une voie d'extraction en utilisant le débit d'extraction souhaité calculé afin de réaliser ledit débit d'extraction souhaité dans le fluide (104).

18. Procédé selon l'une quelconque des revendications 1, 16 ou 17, dans lequel ladite étape de calcul d'un débit d'extraction souhaité $q_c$ (103) comprend l'évaluation de l'équation :

$$q_c = -\alpha \dot{V}_a + \delta q_{bit} + \lambda q_{res} + \gamma \left[ \frac{V_a}{\beta_a} K_p \left( p - p_{ref} \right) \right]$$

dans laquelle $V_a$ est le volume de l'annulus de puits de forage, $\dot{V}_a$ est le taux de variation de $V_a$, $q_{bit}$ est l'écoulement de fluide à l'intérieur de l'annulus au travers d'un appareil de trou de fond, $q_{res}$ est l'écoulement de fluide à l'intérieur de l'annulus à partir d'un réservoir, $\beta_a$ est le module d'élasticité volumique effectif du fluide à l'intérieur de l'annulus, $K_p$ est le gain du contrôleur, et dans laquelle au moins deux de $\alpha$, $\delta$, $\lambda$ et $\gamma = 1$, et chacun des deux restants de $\alpha$, $\delta$, $\lambda$ et $\gamma = 0$ ou 1.

**19.** Procédé selon l'une quelconque des revendications 1, 16 ou 17, ladite étape de calcul d'un débit d'extraction souhaité $q_c$ (103) comprenant l'évaluation de l'équation :

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g \left( p, p_{ref}, t \right) \right]$$

dans laquelle $V_a$ est le volume de l'annulus de puits de forage, $\dot{V}_a$ est le taux de variation de $V_a$, $q_{bit}$ est l'écoulement de fluide à l'intérieur de l'annulus au travers d'un appareil de trou de fond, $q_{res}$ est l'écoulement de fluide à l'intérieur de l'annulus à partir d'un réservoir, $\beta_a$ est le module d'élasticité volumique effectif du fluide à l'intérieur de l'annulus, $K_p$ est le gain du contrôleur, g est $p - p_{ref}$ ou une fonction monotone croissante variant en fonction du temps non linéaire de $p - p_{ref}$, et dans laquelle au moins deux de $\alpha$, $\delta$, $\lambda$, $\phi$ et $\gamma = 1$, et chacun des deux restants de $\alpha$, $\delta$, $\lambda$, $\phi$ et $\gamma = 0$ ou 1.

**20.** Contrôleur (20) pour contrôler la pression à l'intérieur d'un annulus (10) pendant une opération de construction de puits, l'opération comprenant le pompage d'un fluide vers le bas d'une colonne d'exploitation (1) et l'extraction du fluide qui reflue au travers d'un annulus (10) à l'intérieur dudit puits (8) et en entourant la colonne d'exploitation, le contrôleur (20) comprenant et étant **caractérisé par** :

une unité d'établissement de pression pour définir une pression de consigne $p_{ref}$;
un moyen de déterminations de débit (22) pour calculer un débit d'extraction souhaité $q_c$ du fluide à partir dudit annulus en fonction de la pression de consigne $p_{ref}$ et d'un débit pompé à l'intérieur de l'annulus ; et
une unité d'établissement de débit (23) pour établir au moins un dispositif de contrôle d'écoulement dans une voie d'extraction en utilisant le débit d'extraction souhaité calculé afin de réaliser ledit débit d'extraction souhaité dans le fluide.

**21.** Contrôleur (20) pour contrôler la pression à l'intérieur d'un annulus (10) pendant une opération de construction de puits, l'opération comprenant le pompage d'un fluide vers le bas d'une colonne d'exploitation (1) et l'extraction du fluide qui reflue au travers d'un annulus (10) à l'intérieur dudit puits (8) et en entourant la colonne d'exploitation, le contrôleur (20) comprenant et étant **caractérisé par** :

un moyen de surveillance de pression (21) pour déterminer une pression de fluide $p$ à l'intérieur dudit puits de forage et pour déterminer un décalage de pression de la pression déterminée $p$ par rapport à une pression de consigne $p_{ref}$ ;
un moyen de détermination de débit (22) pour utiliser ledit décalage de pression pour calculer un débit d'extraction souhaité $q_c$ du fluide à partir dudit annulus ; et
une unité d'établissement de débit (23) pour établir au moins un dispositif de contrôle d'écoulement dans une voie d'extraction en utilisant le débit d'extraction souhaité calculé afin de réaliser ledit débit d'extraction souhaité dans le fluide.

**22.** Contrôleur selon la revendication 20 ou 21, ledit moyen de détermination de débit (22) étant configuré de manière à ce qu'il calcule un débit d'extraction souhaité $q_c$ en évaluant l'équation :

$$q_c = -\alpha \dot{V}_a + \delta q_{bit} + \lambda q_{res} + \gamma \left[ \frac{V_a}{\beta_a} K_p \left( p - p_{ref} \right) \right]$$

dans laquelle $V_a$ est le volume de l'annulus de puits de forage, $\dot{V}_a$ est le taux de variation de $V_a$, $q_{bit}$ est l'écoulement de fluide à l'intérieur de l'annulus au travers d'un appareil de trou de fond, $q_{res}$ est l'écoulement de fluide à l'intérieur de l'annulus à partir d'un réservoir, $\beta_a$ est le module d'élasticité volumique effectif du fluide à l'intérieur de l'annulus, $K_p$ est le gain du contrôleur, et dans laquelle au moins deux de $\alpha$, $\delta$, $\lambda$ et $\gamma$ = 1, et chacun des deux restants de $\alpha$, $\delta$, $\lambda$ et $\gamma$ = 0 ou 1.

23. Contrôleur selon la revendication 20 ou 21, ledit moyen de détermination de débit (22) étant configuré de manière à ce qu'il calcule un débit d'extraction souhaité $q_c$ en évaluant l'équation :

$$q_c = -\alpha \dot{V}_a + \delta q_{bit} + \lambda q_{res} + \phi \frac{V_a}{\beta_a} \dot{p}_{ref} + \gamma \left[ \frac{V_a}{\beta_a} K_p g \left( p, p_{ref}, t \right) \right]$$

dans laquelle $V_a$ est le volume de l'annulus de puits de forage, $\dot{V}_a$ est le taux de variation de $V_a$, $q_{bit}$ est l'écoulement de fluide à l'intérieur de l'annulus au travers d'un appareil de trou de fond, $q_{res}$ est l'écoulement de fluide à l'intérieur de l'annulus à partir d'un réservoir, $\beta_a$ est le module d'élasticité volumique effectif du fluide à l'intérieur de l'annulus, $K_p$ est le gain du contrôleur, g est $p - p_{ref}$ ou une fonction monotone croissante variant en fonction du temps non linéaire de $p - p_{ref}$, et dans laquelle au moins deux de $\alpha$, $\delta$, $\lambda$, $\phi$ et $\gamma$ = 1, et chacun des deux restants de $\alpha$, $\delta$, $\lambda$, $\phi$ et $\gamma$ = 0 ou 1.

Fig. 1

Step 100 — Begin

Step 101 — Set desired pressure *pref*

Step 102 — Sample wellbore pressure *p*

Step 103 — Compute desired extraction flow rate

$$q_c = -\dot{V}_a + q_{bit} + q_{res} + \frac{V_a}{\beta_a} K_p \left( p - p_{ref} \right)$$

Step 104 — Set choke valve/back pressure pump to achieve *qc*

Figure 2

21

*p* →

MPD
controller

Pressure
monitor

Flow rate
determiner

To choke
valves etc

←

Flow rate
setting unit

22

23

20

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008016717 A
- US 2005269134 A
- US 2005092523 A
- US 2005096848 A
- GB 2447820 A
- US 7044237 B
- US 2007227774 A
- US 2006037781 A
- WO 2008051978 A